# EUROPÄISCHE PATENTANMELDUNG

(11) **EP 4 621 516 A1**
(43) Veröffentlichungstag der Anmeldung: **24.09.2025**
(21) Anmeldenummer: 25156016.5
(22) Anmeldetag: 05.02.2025
(51) Int. Cl.: G05D 1/224, G05D 1/226, G05D 107/13, G05D 109/10, G06F 3/00

(54) **VERFAHREN, FAHRZEUGSTEUERVORRICHTUNG, TELEOPERATIONSSTEUERVORRICHTUNG UND SYSTEM ZUM TELEOPERIERTEN ANSTEUERN EINES FAHRZEUGS SOWIE DIE FAHRZEUGSTEUERVORRICHTUNG AUFWEISENDES FAHRZEUG**

(30) Priorität: 18.03.2024 DE 102024202523
(71) Anmelder: Stellantis Auto SAS, 78300 Poissy (FR); FCA US LLC, Auburn Hills, MI 48326-2766 (US)
(72) Erfinder: FRANK, Sebastian, 65428 Rüsselsheim am Main (DE); EBERLE, Ulrich, 65428 Rüsselsheim am Main (DE)
(74) Vertreter: ESIP

(57) **Zusammenfassung**

Ein Verfahren zum teleoperierten Ansteuern eines Fahrzeugs wird bereitgestellt. Das Verfahren (400) umfasst Bereitstellen (410) von Umgebungssensordaten zum Erfassen einer aktuellen Fahrzeugumgebung des Fahrzeugs, Bereitstellen (420) von Sichtsensordaten zum Erfassen einer aktuellen Sichtrichtung eines von einer Teleoperationsstation operierenden Teleoperateurs des Fahrzeugs von einer Teleoperationsstation sowie Auswerten (430) der Sichtsensordaten und der Umgebungssensordaten zum Ermitteln eines von dem Teleoperateur aktuell erblickten Fokusbereichs (10) der Fahrzeugumgebung, basierend auf der aktuellen Sichtrichtung des Teleoperateurs. Das Verfahren umfasst ferner Reduzieren (440) der Umgebungssensordaten zum Bereitstellen von reduzierten Umgebungssensordaten, so dass die Fahrzeugumgebung mit einer außerhalb des Fokusbereichs (10) herabgesetzten räumlichen Auflösung rekonstruiert werden kann, sowie Übermitteln (450) der reduzierten Umgebungssensordaten an die Teleoperationsstation. Ferner werden eine Fahrzeugsteuervorrichtung, eine Teleoperationssteuervorrichtung und ein System zum teleoperierten Ansteuern eines Fahrzeugs angegeben.

## Beschreibung

Die vorliegende Offenbarung betrifft im Allgemeinen Verfahren zum teleoperierten Ansteuern von Fahrzeugen. Im Speziellen betrifft die vorliegende Offenbarung ein Verfahren, eine Fahrzeugsteuervorrichtung, eine Teleoperationssteuervorrichtung, ein System und ein die Fahrzeugsteuervorrichtung aufweisendes Fahrzeug.

Es sind teleoperierte Fahrzeuge sowie Systeme und Steuervorrichtungen zum teleoperierten Ansteuern von Fahrzeugen bekannt. Für eine verkehrsgerechte Ansteuerung von solchen Fahrzeugen werden oft größere Mengen an Daten zwischen dem jeweiligen Fahrzeug und einer Teleoperationsstation ausgetauscht. Insbesondere werden von Umgebungssensoren von Fahrzeugen erfasste Umgebungsdaten über Funkverbindung an die Teleoperationsstation übermittelt. Angesichts der immer größer werden Vielzahl von Umgebungssensoren, die zur detaillierten Überwachung der Fahrzeugumgebung eingesetzt werden, kann es bei den anfallenden Datenmengen insbesondere in Regionen mit unzureichender Netzabdeckung zu Übertragungsengpässen und Verzögerungen bzw. Latenzen kommen.

Eine Aufgabe der Ausführungsformen der vorliegenden Offenbarung ist es, trotz möglicher Datenübertragungsengpässe ein stabiles und zuverlässiges Ansteuern von teleoperierten Fahrzeugen zu ermöglichen.

Zur Lösung dieser Aufgabe wird nach einem ersten Aspekt ein Verfahren zum teleoperierten Ansteuern eines Fahrzeugs bereitgestellt. Gemäß dem Verfahren werden in einem Verfahrensschritt Umgebungssensordaten zum Erfassen einer aktuellen Fahrzeugumgebung des Fahrzeugs bereitgestellt. In einem weiteren Verfahrensschritt werden Sichtsensordaten zum Erfassen einer aktuellen Sichtrichtung eines von einer Teleoperationsstation operierenden Teleoperateurs des Fahrzeugs von einer Teleoperationsstation bereitgestellt. Das Verfahren umfasst ferner das Auswerten der Sichtsensordaten zum Ermitteln eines von dem Teleoperateur aktuell erblickten Fokusbereichs der Fahrzeugumgebung, basierend auf der aktuellen Sichtrichtung des Teleoperateurs. Das Verfahren umfasst ferner das Reduzieren der Umgebungssensordaten zum Bereitstellen von reduzierten Umgebungssensordaten, so dass die Fahrzeugumgebung mit einer außerhalb des Fokusbereichs herabgesetzten räumlichen Auflösung rekonstruiert werden kann. In einem weiteren Verfahrensschritt werden die reduzierten Umgebungssensordaten an die Teleoperationsstation übermittelt.

Dem hier vorgeschlagenen Verfahren liegt der Gedanke zugrunde, dass Menschen Elemente in unterschiedlichen Zonen ihres Gesichtsfelds mit unterschiedlicher Schärfe wahrnehmen. Insbesondere werden Elemente, die auf die zentrale Stelle der Netzhaut (Fovea) abgebildet werden, scharf wahrgenommen, während in der Peripherie der Netzhaut abgebildete Elemente mit geringerer Auflösung wahrgenommen werden. Durch die Herabsetzung der Auflösung außerhalb des Fokusbereichs bzw. in Randbereichen des Blickfelds können somit Datenmengen reduziert werden, ohne dabei die visuelle Erfassung der Umgebung durch den Teleoperateur merklich zu beeinträchtigen.

Die Umgebungssensordaten zum Erfassen einer aktuellen Fahrzeugumgebung können insbesondere von einer Sensorik bereitgestellt werden. Die Sensorik kann insbesondere eine oder mehrere Kameras, Lidar- und/oder Radar-Sensoren zum Erfassen der Fahrzeugumgebung umfassen. Die Umgebungssensordaten können insbesondere aktuelle Bilddaten, insbesondere durch von den Kameras aufgenommenen Bildern, und/oder Video-Daten umfassen.

Die Umgebungssensordaten können beispielsweise in einem Fahrzeug-Koordinatensystem bzw. in einem mit dem Fahrzeug verbundenen Koordinatensystem oder auch in einem anderen Koordinatensystem bereitgestellt werden. Die Umgebungssensordaten können nach der Übermittlung an die Teleoperationsstation beispielsweise auf einer Anzeigevorrichtung rekonstruiert werden, so dass die Fahrzeugumgebung auf der Anzeigevorrichtung sichtbar sein kann.

Die Sichtsensordaten zum Erfassen einer aktuellen Sichtrichtung eines von einer Teleoperationsstation operierenden Teleoperateurs des Fahrzeugs können von einer Sichtsensorik bereitgestellt werden. Insbesondere kann die Teleoperationsstation eine geeignete Sichtsensorik mit einem oder mehreren Sichtsensoren, wie zum Beispiel Kameras, zur Erfassung der Kopf- und Augenposition des Teleoperateurs umfassen. Die Sichtsensorik kann auch als Teil eines Eye-Tracking-Systems in Form von Kameras oder einer Brille zum Erfassen der aktuelle Augenposition der Teleoperateurs ausgebildet sein. Die Sichtsensordaten können in einem Koordinatensystem der Teleoperationsstation bzw. in einem mit der Teleoperationsstation verbundenen Koordinatensystem oder auch in einem anderen Koordinatensystem bereitgestellt werden.

Das Auswerten der Sichtsensordaten kann insbesondere in der Teleoperationsstation oder in einer Steuervorrichtung des Fahrzeuges erfolgen. Das Auswerten kann auch eine Transformation der Sichtsensordaten in das Fahrzeugkoordinatensystem oder eine Transformation der Umgebungssensordaten in das Koordinatensystem der Teleoperationsstation umfassen. Das Auswerten kann auch die Transformation der Umgebungssensordaten und der Sichtsensordaten in ein weiteres Koordinatensystem umfassen.

Das Auswerten kann auch das Ermitteln des aktuellen Fokusbereichs innerhalb der Fahrzeugumgebung umfassen, der aktuell im Fokusbereich des Teleoperateurs liegt. Das Ermitteln kann insbesondere basierend auf der räumlichen Augenposition des Teleoperateurs bezüglich der Anzeigevorrichtung und anhand der Augengeometrie des Teleoperateurs und/oder einer durchschnittlichen Person.

Der Fokusbereich des Teleoperateurs kann beispielsweise je nach Verkehrssituation bzw. Hindernissen oder potenzielle Gefahren für das teleoperierte Fahrzeug bzw. das Ego-Fahrzeug oder für andere Verkehrsteilnehmer an unterschiedlichen Stellen der Fahrzeugumgebung liegen.

Das Reduzieren der Umgebungssensordaten kann ein Verfahrensschritt sein, bei dem die Menge oder Komplexität der gesammelten Umgebungssensordaten verringert wird, um das zu übertragende Datenvolumen zu reduzieren. Beispielsweise könnten Daten aus den Umgebungssensordaten herausgefiltert oder durch andere Daten ersetzt werden. Insbesondere können Kamerabilddaten durch Bilddaten mit reduzierter räumlicher Auflösung ersetzt werden. Insbesondere können die Kamerabilddaten in ihrer Auflösung in den Bereichen räumlich reduziert sein, die außerhalb des aktuellen Fokusbereichs des Teleoperateurs liegen.

Das Reduzieren der Auflösung der Umgebungssensordaten kann wenigstens teilweise mittels eines Reduktionsalgorithmus erfolgen. Das Reduzieren der Auflösung in Bereichen außerhalb des aktuellen Fokusbereichs bzw. des Fovea-Zentrums des Teleoperateurs erlaubt eine Reduktion des zu übermittelnden Datenvolumens ohne eine für den Teleoperateur wahrnehmbare Einbuße an Darstellungsqualität der auf der Anzeigevorrichtung dargestellten Fahrzeugumgebung. Denn das menschliche Auge des Teleoperateurs kann nur in einem kleinen Bereich des Gesichtsfeldes (Fovea-Zentrum) eine hohe Auflösung und Detailgenauigkeit wahrnehmen.

Die Sichtsensorik kann die Augenbewegungen des Teleoperateurs im Wesentlichen kontinuierlich verfolgen und den vom Teleoperateur aktuell erblickten Fokusbereich im Wesentlichen kontinuierlich ermitteln. Der ermittelte Fokusbereich kann kontinuierlich an das Ego-Fahrzeug übermittelt werden. Das Reduzieren der Umgebungssensordaten kann kontinuierlich in den Bereichen außerhalb des Fokusbereichs des Teleoperateurs, beispielsweise in einer Steuervorrichtung des Fahrzeugs, erfolgen, so dass das Bereitstellen und Übermitteln der reduzierten Umgebungssensordaten an die Teleoperationsstation im Wesentlichen kontinuierlich erfolgen kann. Das Reduzieren der Umgebungssensordaten kann grundsätzlich auch in jeder anderen Steuervorrichtung erfolgen.

Die aus den Umgebungssensordaten rekonstruierte Fahrzeugumgebung kann für den Teleoperateur im Fokusbereich in hoher Auflösung und Detailgenauigkeit auf der Anzeigevorrichtung dargestellt werden, während Bereiche außerhalb des Fokusbereichs mit geringerer Auflösung und Detailgenauigkeit dargestellt werden können. Basierend auf der detailgenauen Darstellung in dem Fokusbereich kann der Teleoperateur Steuerungsmaßnahmen zum sicheren Ansteuern des Fahrzeugs vornehmen, was Steuersignale auslösen kann. Die Steuersignale können von Teleoperationsstation an das Ego-Fahrzeug übermittelt werden, so dass das Ego-Fahrzeug anhand der Steuersignale insbesondere im Straßenverkehr gesteuert werden kann. Dadurch kann das Fahrzeug in Echtzeit im Straßenverkehr ohne Anwesenheit eines Fahrers im Fahrzeug gesteuert werden.

Das Verfahren kann einen Verfahrensschritt umfassen wonach ein Reduzieren der Umgebungssensordaten ein dynamisches Anpassen der räumlichen Auflösung in Abhängigkeit einer während der Fahrt wechselnden Netzabdeckungs- und Übertragungskapazitätsbedingungen umfasst. Das dynamische Anpassen kann beispielsweise wenigstens teilweise basierend auf einer Latenzzeit der Übermittlung der Umgebungssensordaten and die Teleoperationsstation erfolgen, insbesondere initiiert werden. Insbesondere können die Umgebungssensordaten bei Überschreiten eines Schwellwertes der Latenzzeit mittels des Reduktionsalgorithmus weiter reduziert werden, so dass die Latenzzeit im Wesentlichen unterhalb des Schwellwertes bleibt. Dadurch kann eine Überlastung der Bandbreite und eine zeitliche verzögerte Rekonstruktion der Fahrzeugumgebung auf der Anzeigevorrichtung vermieden und die Sicherheit des teleoperierten Fahrzeugs erhöht werden. Das teleoperierte Fahrzeug kann auch bei verschlechterten Datenübertragungsverbindungen steuerbar bleiben.

Das Verfahren kann ein dynamisches Anpassen des Fokusbereichs umfassen. Insbesondere kann durch eine Anpassung der Größe bzw. Ausdehnung des Fokusbereichs aktuellen Netzabdeckungs- und Übertragungskapazitätsbedingungen Rechnung getragen werden.

Das Verfahren kann einen Datenkompressionsschritt vor dem Übertragen der Umgebungssensordaten umfasst, so dass das zu übertragende Datenvolumen der Umgebungssensordaten reduzieren werden kann. Das Datenkompressionsverfahren kann insbesondere ein verlustbehaftetes Datenkompressionsverfahren sein. Datenverluste könnten dazu führen, dass die Fahrzeugumgebung nicht vollständig rekonstruiert werden kann. Insbesondere können in dem Datenkompressionsverfahren Datenverluste von Umgebungssensordaten in Kauf genommen werden, welche die Bereiche außerhalb des Fokusbereichs repräsentieren. Das Datenkompressionsverfahren kann das Datenvolumen für die Übermittlung der reduzierten Umgebungssensordaten weiter reduzieren und die Gefahr einer Überlastung der Bandbreite und eine zeitliche verzögerte Rekonstruktion der Fahrzeugumgebung auf der Anzeigevorrichtung reduzieren.

Das Auswerten kann Approximieren des Fokusbereichs zu einer geometrischen Grundform, wie insbesondere Kreis, Rechteck und/oder Ellipse, umfassen. Das Zentrum des Fokusbereichs kann von der Sichtsensorik festgelegt sein, die Ausdehnung des Fokusbereichs kann insbesondere durch eine geometrische Grundform wie beispielsweise eine Ellipse, ein Kreis oder ein Rechteck vorgegeben sein. Beispielsweise könnte die Ausdehnung des Fokusbereichs, insbesondere in verschiedene Raumrichtungen von dem Teleoperateur einstellbar sein und/oder von einem Algorithmus berechnet werden. Bei der Berechnung der Ausdehnung des Fokusbereichs kann beispielsweise der Sichtbereich eines x-Perzentil Menschen herangezogen werden, wobei sich das x-Perzentil auf eine statistische Messung bezieht, die angibt, wie eine bestimmte Eigenschaft oder Fähigkeit eines Individuums im Vergleich zu einer definierten Gruppe von Menschen ausgeprägt ist. Durch die Vorgabe des Fokusbereichs kann die Berechnung und Implementierung des Fokusbereichs vereinfacht werden.

Nach einem zweiten Aspekt wird eine Fahrzeugsteuervorrichtung zur Datenübertragung beim teleoperierten Ansteuern eines Fahrzeugs bereitgestellt. Insbesondere ist die Fahrzeugsteuervorrichtung zum Durchführen eines Verfahrens gemäß dem ersten Aspekt der Erfindung ausgebildet Die Steuervorrichtung umfasst einen Prozessor, eine Speichereinheit zum Speichern von maschinenlesbaren Anweisungen für den Prozessor, und eine Schnittstelle. Die Schnittstelle ist dazu ausgebildet, Umgebungssensordaten zum Erfassen einer aktuellen Fahrzeugumgebung des Fahrzeugs zu empfangen. Die Schnittstelle ist ferner dazu ausgebildet, Sichtsensordaten zum Erfassen einer aktuellen Sichtrichtung eines Teleoperateurs des Fahrzeugs zu empfangen, und die Umgebungssensordaten an eine Teleoperationsstation zu übermitteln.

Die Speichereinheit enthält Anweisungen für den Prozessor, Umgebungssensordaten zum Bereitstellen von reduzierten Umgebungsdaten zu reduzieren, so dass die Fahrzeugumgebung mit einer außerhalb des Fokusbereichs herabgesetzten räumlichen Auflösung rekonstruiert werden kann, und die Schnittstelle zum Übermitteln der reduzierten Umgebungssensordaten an die Teleoperationsstation anzusteuern.

Vorteile und Weiterbildungen der Fahrzeugsteuervorrichtung ergeben sich aus den Vorteilen und Wirkungen sowie Weiterbildungen des oben beschriebenen Verfahrens. Zur Vermeidung von Wiederholungen wird daher in dieser Hinsicht auf die vorangegangene Beschreibung verwiesen. Insbesondere kann der Teleoperateur Aufgrund der Datenvolumenreduktion den Überblick über die Fahrzeugumgebung trotzt etwaiger Übertragungsengpässe beibehalten.

Nach einem dritten Aspekt wird eine Teleoperationssteuervorrichtung zum teleoperierten Ansteuern eines Fahrzeugs vorgeschlagen. Insbesondere ist die Fahrzeugsteuervorrichtung zum Durchführen eines Verfahrens gemäß dem ersten Aspekt der Erfindung ausgebildet. Die Steuervorrichtung umfasst einen Prozessor, eine Speichereinheit zum Speichern von maschinenlesbaren Anweisungen für den Prozessor, und eine Schnittstelle. Die Schnittstelle ist dazu ausgebildet, Sichtsensordaten zum Erfassen einer aktuellen Sichtrichtung eines Teleoperateurs des Fahrzeugs zu empfangen und die Sichtsensordaten an eine Fahrzeugsteuervorrichtung zu übermitteln. Die Schnittstelle ist auch dazu ausgebildet reduzierte Umgebungssensordaten von der Fahrzeugsteuervorrichtung zu empfangen, und Steuerbefehle zum Ansteuern (insbesondere eines Graphik-Treibers) einer Anzeigevorrichtung auszugeben, wobei die Speichereinheit Anweisungen für den Prozessor enthält, die Anzeigevorrichtung zum Darstellen einer anhand der reduzierten Umgebungssensordaten rekonstruierten Fahrzeugumgebung anzusteuern.

Vorteile und Weiterbildungen der Teleoperationssteuervorrichtung ergeben sich aus den Vorteilen und Wirkungen sowie Weiterbildungen des oben beschriebenen Verfahrens. Zur Vermeidung von Wiederholungen wird daher in dieser Hinsicht auf die vorangegangene Beschreibung verwiesen.

In einigen Ausführungsbeispielen kann die Sichtsensorik wenigstens eine Infrarotkamera umfassen. Die Schnittstelle kann ausgebildet sein, Sichtsensordaten von wenigstens einer Infrarotkamera zu empfangen. Die Infrarotkamera kann die Augenbewegungen des Teleoperateurs auch in Umgebungen mit schlechten Lichtverhältnissen oder in Situationen, in denen herkömmliche Kameras keine ausreichenden Informationen liefern können, erfassen. Durch die Integration einer Infrarotkamera kann zudem die Genauigkeit der Erfassung von Sichtsensordaten und die Zuverlässigkeit der Sichterfassung insgesamt verbessert werden.

Nach einem vierten Aspekt wird ein System zur Datenübertragung beim teleoperierten Ansteuern eines Fahrzeugs vorgeschlagen. Das System umfasst eine Fahrzeugsteuervorrichtung gemäß dem zweiten Aspekt und eine Teleoperationssteuervorrichtung gemäß dem dritten Aspekt. Die Schnittstelle der Fahrzeugsteuervorrichtung ist konfiguriert, Umgebungssensordaten von der Fahrzeugsteuervorrichtung an die Teleoperationssteuervorrichtung zu übermitteln, und die Schnittstelle der Teleoperationssteuervorrichtung ist konfiguriert, Steuerbefehle von der Teleoperationssteuervorrichtung an die Fahrzeugsteuervorrichtung zum Ansteuern des Fahrzeugs zu übermitteln. Das System kann insbesondere so ausgebildet sein, dass die Anforderungen an die Fahrzeugsteuervorrichtung und an die Teleoperationssteuervorrichtung aufeinander abgestimmt sind, so dass das System die zur Verfügung stehende Bandbreite zur Datenübertragung besonders effektiv nutzen kann.

Nach einem fünften Aspekt wird ein Fahrzeug vorgeschlagen, wobei in dem Fahrzeug eine Fahrzeugsteuervorrichtung zum teleoperierten Ansteuern eines Fahrzeugs gemäß dem zweiten Aspekt implementiert ist. Speziell im Vergleich zu anderen fernsteuerbaren Fahrzeugen kann das Fahrzeug die zur Verfügung stehende Bandbreite zur Datenübertragung besonders effektiv nutzen.

Die Erfindung wird nun anhand der beigefügten Figuren näher erläutert. Für gleiche oder gleichwirkende Teile werden in den Figuren gleiche Bezugszeichen verwendet.
- Fig. 1: zeigt schematisch eine Teleoperationsstation gemäß einem Ausführungsbeispiel,
- Fig. 2: zeigt ein Blockdiagramm einer Fahrzeugsteuervorrichtung gemäß einem Ausführungsbeispiel,
- Fig. 3: zeigt ein Blockdiagramm einer Teleoperationssteuervorrichtung gemäß einem Ausführungsbeispiel, und
- Fig. 4: zeigt ein Flussdiagramm eines Verfahrens teleoperierten Ansteuern eines Fahrzeugs gemäß einem Ausführungsbeispiel.

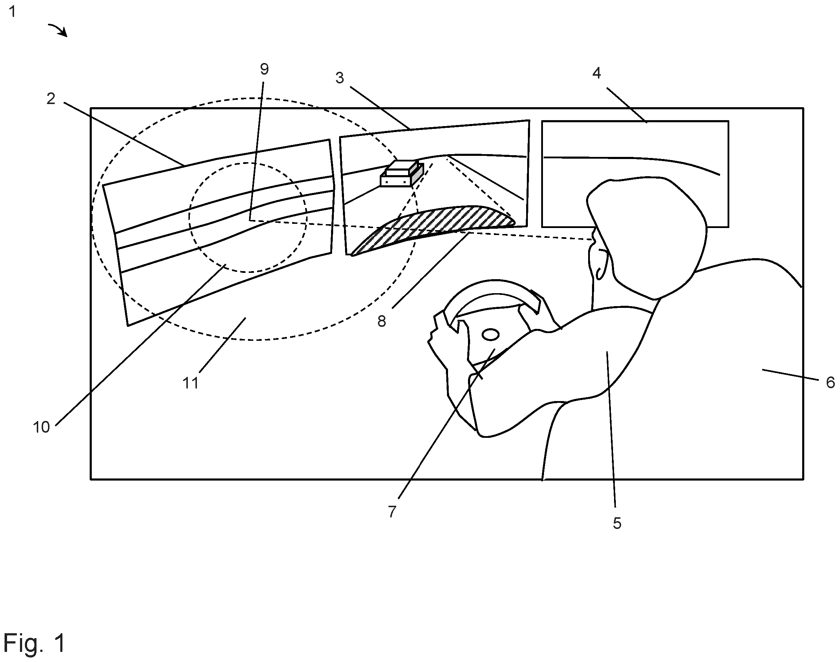

Fig. 1 zeigt schematisch eine Teleoperationsstation gemäß einem Ausführungsbeispiel. Insbesondere zeigt Fig. 1 die Teleoperationsstation 1 in einer schematischen perspektivischen Ansicht. Die Teleoperationsstation 1 umfasst eine Anzeigevorrichtung mit Displays 2, 3 und 4 zum Anzeigen einer Fahrzeugumgebung aus unterschiedlichen Kamera-Perspektiven. Insbesondere zeigt ein erstes Display 2 die Fahrzeugumgebung aus der Perspektive einer nach vorne und links gerichteten Kamera, ein zweites Display 3 aus der Perspektive einer Frontkamera, und ein drittes Display 4 aus der Perspektive einer nach vorne und rechts gerichteten Kamera. Fig. 1 zeigt ferner einen Operateur 5 in einem Operateur-Sitz 6 mit einem Lenkrad 7 in der Hand.

Die Teleoperationsstation 1 ist dazu ausgestattet und konfiguriert, dass der Operateur 5 das Fahrzeug gemäß dem hier vorgeschlagenen Verfahren teleoperierend Ansteuern kann. Insbesondere kann die Teleoperationsstation 1 ein Eye-Tracking System umfassen zum Erkennen, welche Stelle der Displays von dem Teleoperateur betrachtet wird. Der Bereich hoher Auflösung kann durch verschiedene Geometrische Formen festgelegt werden. Diese Formen sind beispielsweise eine Ellipse oder ein Rechteck. Bei der Berechnung der Ausdehnung der geometrischen Form kann insbesondere der Sichtbereich eines x-Perzentil Menschen herangezogen werden. Da der Sichtbereich von Mensch zu Mensch variiert, muss wegen verschiedener Körpergrößen der Abstand zu den Displays geändert werden. Daher ist es auch denkbar, die individuelle Gleichung zur Berechnung des Bereichs hoher Auflösung empirisch zu bestimmen.

Zur Verdeutlichung des Verfahrens wird in Fig. 1 eine aktuelle Sichtrichtung des Operateurs als eine schematische Sichtline 8 zwischen dem Kopf des Operateurs 5 und einem Blickfokuspunkt 9 bzw. Blickzentrum auf der Anzeigevorrichtung eingezeichnet. Um das Zentrum herum ist ein kreisförmiger Fokusbereich 10 bzw. Bereich höherer Auflösung als gestrichelter Kreis dargestellt. Um den Fokusbereich 10 herum ist ein ringförmiger Bereich 11 niedriger Auflösung ebenfalls gestricht dargestellt.

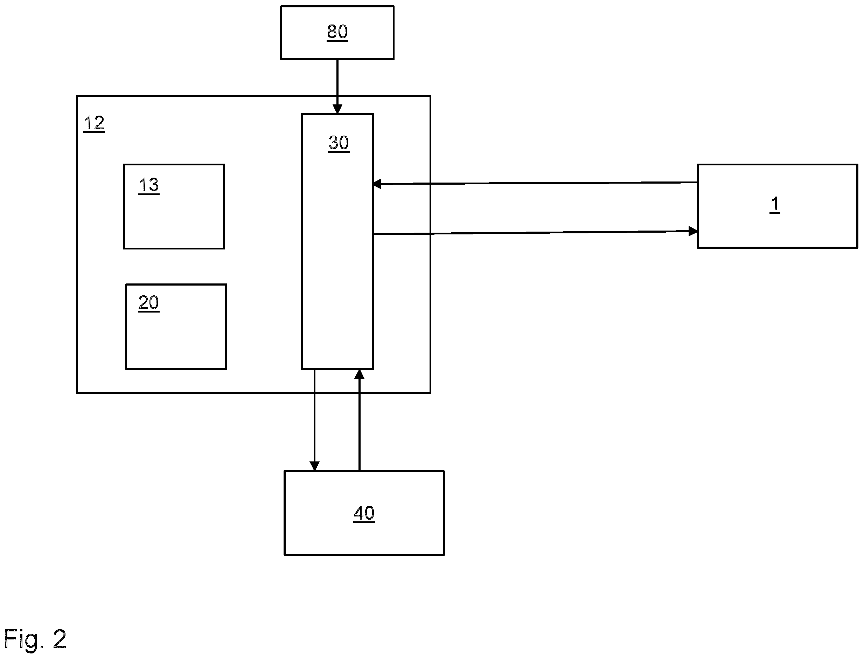

Fig. 2 zeigt ein Blockdiagramm einer Fahrzeugsteuervorrichtung gemäß einem Ausführungsbeispiel. Die Fahrzeugsteuervorrichtung 12 kann insbesondere als Teil eines an dem Fahrzeug montierbaren Steuermoduls sein. Die Fahrzeugsteuervorrichtung 12 umfasst einen Prozessor 13, eine Speichereinheit 20 zum Speichern von maschinenlesbaren Anweisungen für den Prozessor 13 sowie eine Schnittstelle 30. Fig. 2 zeigt ferner eine Fahrzeugsteuereinheit 40 bzw. Steuergerät des Fahrzeugs sowie eine Teleoperationsstation 1 zum Fernsteuern des Fahrzeugs. Die Fahrzeugsteuereinheit 40 kann insbesondere eine zentrale Steuereinheit bzw. Steuergerät des Fahrzeugs sein, welche dazu ausgebildet ist, den Fahrzeugzustand bzw. den Zustand der einzelnen Fahrzeugkomponenten anzusteuern. Die Schnittstelle 30 ist dazu ausgebildet, von der Teleoperationsstation 1 Steuerbefehle (symbolisch als Pfeil dargestellt) zu empfangen und an die Fahrzeugsteuereinheit 40 Steuersignale zum Ansteuern des Fahrzeugs auszugeben, symbolisch als Pfeil dargestellt.

Die Speichereinheit 20 enthält Anweisungen für den Prozessor 13, basierend auf den von der Teleoperationseinheit 50 empfangenen Steuerbefehlen die Steuersignale zu generieren und die Steuersignale an die Fahrzeugsteuereinheit 40 auszugeben. Mittels des an dem Fahrzeug montierten Steuermodul mit der Steuervorrichtung 1 kann somit das Fahrzeug von der Teleoperationsstation 1 ferngesteuert werden.

Fig. 2 zeigt ferner symbolisch eine Sensorik 80 zum Erfassen einer aktuellen Fahrzeugumgebung. Die Sensorik 80 kann insbesondere einen oder mehrere Sensoren bzw.

Echtzeit-Beobachtungsvorrichtungen oder Bilderfassungssysteme, wie optische Sensoren, Kameras, Radar- und/oder Lidar-Sensoren, umfassen. In dem gezeigten Ausführungsbeispiel ist die Schnittstelle 30 ferner dazu ausgebildet, Sensordaten (symbolisch als Pfeil dargestellt) zum Erfassen der Fahrzeugumgebung von der Sensorik 80 zu empfangen.

In einigen Ausführungsbeispielen enthält die Speichereinheit 20 Anweisungen für den Prozessor 10, die Sensordaten auszuwerten und die Steuersignale zum Ansteuern des Fahrzeugs wenigstens teilweise basierend auf der aktuellen Fahrzeugumgebung zu generieren. In einigen Ausführungsbeispielen ist die Schnittstelle 30 dazu ausgebildet, die aktuelle Fahrzeugumgebung beschreibenden Daten bzw. Bilder an die Teleoperationseinheit 1 zu senden. Insbesondere können durch die Sensorik aufgenommene Bilder und/ oder Videos an die Teleoperationseinheit übertragen werden. Anhand der die aktuelle Fahrzeugumgebung beschreibenden Daten kann die Steuerung bzw. Fernsteuerung des Fahrzeugs an die aktuelle Fahrzeugumgebung angepasst werden.

In einigen Ausführungsbeispielen ist die Schnittstelle 30 dazu ausgebildet, Fahrzeugdaten von der Fahrzeugsteuereinheit 40 bzw. Fahrzeugelektronik zum Erfassen eines aktuellen Fahrzeugzustands zu empfangen. In einigen Ausführungsbeispielen ist die Schnittstelle 30 dazu ausgebildet, den aktuellen Fahrzeugzustand beschreibenden Daten an die Teleoperationsstation zu senden. Anhand der den aktuellen Fahrzustand bzw. Fahrzeugzustand beschreibenden Daten kann die Fernsteuerung des Fahrzeugs an den jeweils aktuellen Fahrzeugzustand angepasst werden.

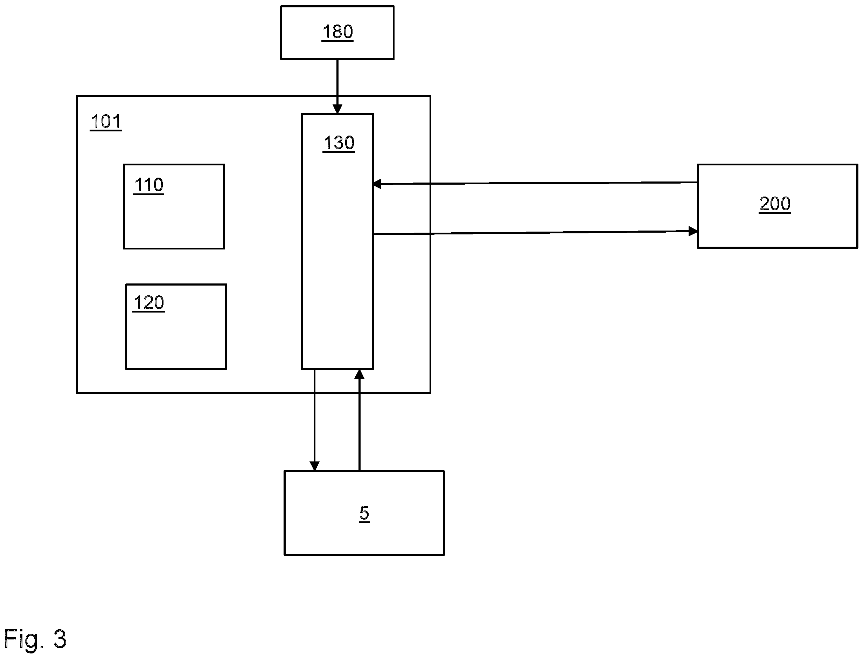

Fig. 3 zeigt ein Blockdiagramm einer Teleoperationssteuervorrichtung gemäß einem Ausführungsbeispiel. Die Teleoperationssteuervorrichtung 101 umfasst einen Prozessor 110, eine Speichereinheit 120 zum Speichern von Daten und maschinenlesbaren Anweisungen für den Prozessor 120 sowie eine Schnittstelle 130. Die Schnittstelle 130 ist ausgebildet, Sichtsensordaten von einer Sensorik 180, insbesondere Sichtsensorik, der Teleoperationsstation 1 zum Erfassen einer aktuellen Sichtrichtung des Teleoperateurs 5 zu empfangen, und die Sichtsensordaten an eine Fahrzeugsteuervorrichtung des Fahrzeugs 200 zu übermitteln, symbolisch als Pfeil 111 dargestellt. Insbesondere kann die Schnittstelle 130 ferner eine HMI (Human Machine Interface) umfassen und dazu ausgebildet sein, Steuerbefehle von dem Operateur 5 zum teleoperierten Ansteuern des Fahrzeugs 200 zu empfangen.

Die Schnittstelle 130 ist ferner dazu ausgebildet, Umgebungssensordaten, insbesondere reduzierte Umgebungssensordaten, von der Fahrzeugsteuervorrichtung 12 zu empfangen und Steuerbefehle zum Ansteuern einer Anzeigevorrichtung auszugeben.

Die Speichereinheit 120 enthält ferner Anweisungen für den Prozessor 110, die Anzeigevorrichtung zum Darstellen einer anhand der reduzierten Umgebungssensordaten rekonstruierten Fahrzeugumgebung anzusteuern.

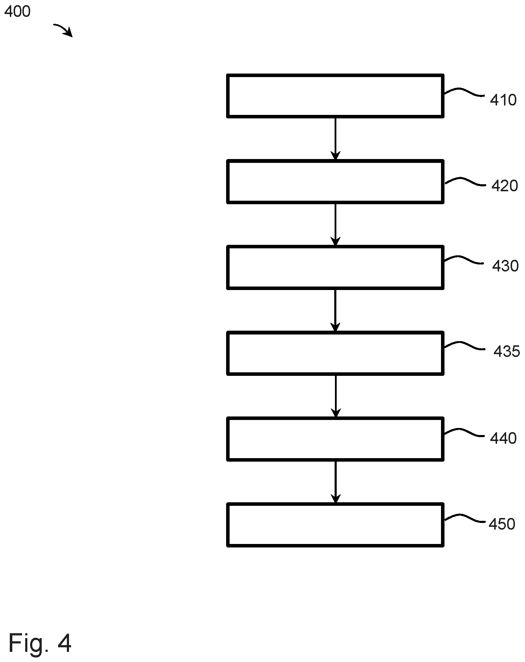

Fig. 4 zeigt ein Flussdiagramm eines Verfahrens teleoperierten Ansteuern eines Fahrzeugs gemäß einem Ausführungsbeispiel. Das Verfahren kann insbesondere mittels eines Systems oben beschriebenen Systems zum teleoperierten Ansteuern eines Fahrzeugs durchgeführt werden.

Gemäß dem Verfahren 400 werden in einem Verfahrensschritt 410 Umgebungssensordaten zum Erfassen einer aktuellen Fahrzeugumgebung des Fahrzeugs bereitgestellt. Die Umgebungssensordaten können insbesondere von einem oder mehreren Umgebungssensoren des der Sensorik bzw. Fahrezugsensorik bereitgestellt und ggf. in der Speichereinheit der Fahrzeugsteuervorrichtung gespeichert werden.

In einem Verfahrensschritt 420 werden Sichtsensordaten zum Erfassen einer aktuellen Sicht- bzw. Blickrichtung eines von der Teleoperationsstation operierenden Teleoperateurs bereitgestellt. Die Sichtsensordaten können insbesondere mit einer Sichtsensorik der Teleoperationsstation bereitgestellt werde und ggf. in der Speichereinheit der Teleoperationssteuervorrichtung gespeichert werden. Die Sichtsensorik kann insbesondere dazu ausgebildet sein, die Kopf- und/oder Augenposition des Teleoperateurs zu erfasse. Aus diesen Daten und aus der bekannten Position der Darstellungseinheit bzw. der Anzeigevorrichtung der Teleoperationsstation kann das aktuelle Gesichtsfeld des Teleoperators ermittelt werden.

In einem Verfahrensschritt 430 werden die Sichtsensordaten zum Ermitteln eines von dem Teleoperateur aktuell erblickten Fokusbereichs der Fahrzeugumgebung basierend auf der aktuellen Sichtrichtung des Teleoperateurs ausgewertet. Insbesondere kann die Auswertung unter Berücksichtigung eines Mappings zwischen der Fahrzeugumgebung in Fahrzeugkoordinaten und einer Anzeigevorrichtung der Teleoperationsstation in einem Koordinatensystem der Teleoperationsstation erfolgen. Das Mapping kann insbesondere für jedes System einmal, insbesondere beim Konfigurieren des Systems, durchgeführt oder immer wieder zur Kontrolle durchgeführt werden. Die Auswertung kann wenigstens teilweise mittels der Teleoperationssteuervorrichtung und/oder der Fahrzeugsteuervorrichtung erfolgen.

Das Auswerten in dem Verfahrensschritt 430 kann auch Approximieren des Fokusbereichs zu einer geometrischen Grundform, wie insbesondere Kreis, Rechteck, Ellipse, Hexagon o.ä. umfassen. Durch die Approximation des Fokusbereichs als eine einfache geometrische Figur kann die rechentechnische Handhabung vereinfacht bzw. den Rechenaufwand insbesondere der Teleoperationssteuervorrichtung reduziert werden.

In einem Verfahrensschritt 435 können die Ergebnisse der Auswertung in dem Verfahrensschritt 430 bzw. der ermittelte Fokusbereich an die Fahrzeugsteuervorrichtung übertragen werden.

In einem Verfahrensschritt 440 werden die Umgebungssensordaten zum Bereitstellen von reduzierten Umgebungsdaten, insbesondere mittels eines Reduktionsverfahrens, reduziert, so dass die Fahrzeugumgebung mit einer außerhalb des Fokusbereichs herabgesetzten räumlichen Auflösung rekonstruiert werden kann. Die Datenreduktion kann insbesondere mittels der Fahrzeugsteuervorrichtung durchgeführt werden.

In einem Verfahrensschritt 450 werden die reduzierten Umgebungssensordaten an die Teleoperationsstation übermittelt. Anhand der reduzierten Umgebungssensordaten kann die Fahrzeugumgebung in der Teleoperationsstation rekonstruiert und dem Teleoperateur eine rekonstruierte Umgebung auf der Anzeigevorrichtung der Teleoperationsstation präsentiert werden. Durch die Datenreduktion wird dabei die visuelle Erfassung der Fahrzeugumgebung durch den Teleoperateur kaum beeinträchtigt, da sein Blick auf den hochaufgelösten Fokusbereich gerichtet ist. Aufgrund der Herabsetzung der Auflösung außerhalb des Fokusbereichs, kann dabei das zu übertragende Datenvolumen erheblich reduziert werden, so dass die Problematik der Übertragungsengpässe und Latenzzeiten entschärft werden kann.

In einigen Ausführungsbeispielen umfasst das Reduzieren 450 in dem Verfahrensschritt der Umgebungssensordaten ein dynamisches Anapassen der räumlichen Auflösung in Abhängigkeit einer während der Fahrtwechselnden Netzabdeckungs- und/oder Übertragungskapazitätsbedingungen. Das dynamische Anpassen kann dabei wenigstens teilweise basierend auf einer Latenzzeit der Übermittlung der Umgebungssensordaten an die Teleoperationsstation erfolgen werden. Das dynamische Anpassen kann beispielsweise ein Anpassen der räumlichen Auflösung innerhalb des Fokusbereichs umfassen. Beispielsweise kann die räumliche Auflösung innerhalb des Fokusbereichs so angepasst werden, dass die Auflösung im Zentrum des Fokusbereichs maximal ist und vom Zentrum zur Peripherie hin kontinuierlich oder allmählich abnimmt.

Das Verfahren kann auch ein dynamisches Anpassen des Fokusbereichs umfassen. Insbesondere ist es denkbar, dass der Teleoperateur den Fokusbereich bzw. den Bereich hoher Auflösung vor Ort bzw. von der Teleoperationsstation aus nach individuellen Präferenzen variieren kann.

In einigen Ausführungsbeispielen umfasst das Verfahren auch einen Datenkompressionsschritt. Die Datenkompression kann insbesondere vor dem Übertragen der reduzierten Umgebungssensordaten in dem Verfahrensschritt 450 stattfinden. Durch die Datenkompression kann das zu übertragende Datenvolumen weiter reduziert und die Robustheit des Verfahrens gegenüber Übertragungsengpässen weiter erhöht werden kann.

Die Verfahrensschritte 410, 440 und 450 können insbesondere mittels der Fahrzeugsteuervorrichtung bzw. am Fahrzeug durchgeführt. Die Verfahrensschritte 120 und 130 können insbesondere mittels der Teleoperationssteuervorrichtung bzw. an der Teleoperationsstation durchgeführt werden. Grundsätzlich ist auch denkbar, dass das einige der o. g. Verfahrensschritte, beispielsweise Reduktionsverfahren, wenigstens teilweise an einem anderen Ort durchgeführt wird. Vorzugsweise wird Datenverarbeitung, insbesondere Datenreduktion und/oder Datenkompression, vor einem "Flaschenhals", d. h. vor einer Datenschnittstelle bzw. Netzwerkknoten mit geringem Durchsatz vorgenommen.

Das Verfahren kann ferner weitere Übertragungsschritte zum Übertragen von Daten und/oder Signalen zwischen der Fahrzeugsteuervorrichtung und der Teleoperationsstation umfassen. Insbesondere können in weiteren Verfahrensschritten dynamisch angepasste Fokusbereiche an die Fahrzeugsteuervorrichtung und/oder Steuersignale von der Teleoperationsstation an die Fahrzeugsteuervorrichtung zum Ansteuern des Fahrzeugs übertagen werden.

Es ist auch denkbar, dass der Teleoperateur den Bereich hoher Auflösung vor Ort variieren kann. Es ist ebenfalls denkbar, dass der Bereich hoher Auflösung während der Fahrt an die aktuelle Netzwerkleistungsfähigkeit angepasst wird, sodass bei geringer Bandbreite weiterhin ein Bereich hoher Auflösung im Bereich des scharfen Sehens bereitgestellt werden kann.

Ausgabe dieses Vorgangs ist also zum Beispiel der Start und das Ende des Bereichs scharfen Sehens (bei rechteckiger Geometrischer Form). In diesem Fall würden die Steuerungsdaten, welche an das Fahrzeug gesandt werden, um diese beiden Bereiche erweitert. Es ist Teil des Kommunikationsprotokolls wie diese Daten übertragen werden. Es können jedoch jeweils der Minimaldatensatz zur Beschreibung der geometrischen Form verwendet werden.

Daher empfiehlt es sich, einfache geometrische Formen zu wählen, welche von wenigen Daten (z. B. Kreis - Position und Durchmesser) beschrieben werden können. Es ist auch denkbar, dass nur das Zentrum des Sichtfeldes übertragen wird. In diesem Fall kann bereits ein voreingestellter Durchmesser, der dem Fahrzeug bereits bekannt ist, oder ein anderer bestimmender Parameter der geometrischen Form, genutzt werden. Es ist denkbar, dass die voreingestellten Daten jeweils zum Start der Teleoperationssitzung gesandt werden.

Es ist ferner denkbar, dass nur das Zentrum des Sichtfeldes übertragen wird, und die Abnahme der Auflösung kontinuierlich vom Zentrum ausgehend vorgenommen wird. Hierbei ist es auch denkbar, dass die Abnahme einer geometrischen Form folgt. Wichtig ist, dass nur "räumlich" aber nicht "zeitlich" die Auflösung herabgesetzt wird, um relevante Bewegungen "aus dem Augenwinkel" weiterhin bemerkbar zu machen.

Die anzuzeigenden Daten müssen bei der Teleoperation auf die Displays projiziert werden. Die Zuordnung, welcher Bildbereich welchem Teil eines Kamerabildes zuzuordnen ist, muss daher bekannt sein. Bei einem rechteckigen Bereich scharfen Sehens ist es denkbar, dass das Bild der Kamera selbst in Teilbilder unterteilt wird, der Bildbereich des scharfen Sehens bildet dabei ein Teilbild dieser Bilder. Dieses Teilbild wird mit hoher Auflösung übertragen. Teilbilder, welche nicht den Bildbereich des scharfen Sehens abbilden, werden mit niedriger Auflösung übertragen. Dieses Vorgehen schließt die anschließende Kompression der Bilder mit gängigen Kompressionstechniken nicht aus. Es ist hierzu anzumerken, dass das hier beschriebene Verfahren andere Verfahren zur Datenreduktion, wie beispielsweise Herabsetzung der Auflösung von durch Objekterkennung als nicht relevant identifizierten Bildbereichen, nicht ausschließt.

Es ist ebenfalls möglich, dass die Bilder nicht in Teilbilder übertragen werden. Es ist denkbar, dass die Bildbereiche mit niedriger Auflösung durch das Setzen der Farbwerte auf 0 für entfernte Pixel erhalten bleiben. Es ist ebenfalls denkbar, dass entfernte Pixel durch benachbarte Pixel ersetzt (Duplikat) werden. Die Ausnutzung dieser Technik hängt von dem anschließenden Videokompressionsverfahren ab, bei welchem zum Beispiel duplizierte Pixel entfernt werden können. Im Falle einer kontinuierlichen Reduktion der Auflösung ausgehend vom Zentrum der Sichtlinie kann das letztgenannte Verfahren angewandt werden.

Es ist denkbar, dass der Teleoperateur das System vor Ort manipulieren kann, um zum Beispiel den Bereich hoher Auflösung zu reduzieren oder das System zu deaktivieren. Es ist denkbar, dass der Bereich mit hoher Auflösung, welcher vom Teleoperationscenter an das Fahrzeug übertragen wird, automatisiert an die aktuelle Netzwerkleistungsfähigkeit angepasst wird, sodass auch im Falle einer schlechten Datenübertragung relevante Bereiche mit hoher Auflösung übertragen werden.

Es ist auch denkbar, dass einzelne Displayeinrichtungen, wie zum Beispiel die Repräsentation des Rückspiegels beim Blick zu dieser Repräsentation als einziges Element der Monitore mit hoher Auflösung dargestellt wird, während die verbleibende Kamerabilder mit geringer Auflösung übertragen werden.

Die hier beschriebene Reduktion des zu übertragenden Datenvolumens ermöglicht somit eine geringere Latenz, geringere benötigte Bandbreite, höhere Stabilität und insgesamt höhere Qualität des teleoperierten Ansteuerns von Fahrzeugen, insbesondere in Bereichen niedriger Netzwerkleistungsfähigkeit.

Obwohl zumindest eine beispielhafte Ausführungsform in der vorhergehenden Beschreibung gezeigt wurde, können verschiedene Änderungen und Modifikationen vorgenommen werden. Die genannten Ausführungsformen sind lediglich Beispiele und nicht dazu vorgesehen, den Gültigkeitsbereich, die Anwendbarkeit oder die Konfiguration der vorliegenden Offenbarung in irgendeiner Weise zu beschränken. Vielmehr stellt die vorhergehende Beschreibung dem Fachmann einen Plan zur Umsetzung zumindest einer beispielhaften Ausführungsform zur Verfügung, wobei zahlreiche Änderungen in der Funktion und der Anordnung von in einer beispielhaften Ausführungsform beschriebenen Elementen gemacht werden können, ohne den Schutzbereich der angefügten Ansprüche und ihrer rechtlichen Äquivalente zu verlassen. Außerdem können nach den hier beschriebenen Prinzipien auch mehrere Module bzw. mehrere Produkte miteinander verbunden werden, um weitere Funktionen zu erhalten.

### Bezugszeichenliste

- 1: Teleoperationsstation
- 2: Display
- 3: Display
- 4: Display
- 5: Teleoperateur
- 6: Sitz
- 7: Lenkrad
- 8: Sichtlinie
- 9: Zentrum
- 10: Fokusbereich
- 11: Bereich niedriger Auflösung
- 12: Fahrzeugsteuervorrichtung
- 13: Prozessor

- 20: Speichereinheit
- 30: Schnittstelle
- 40: Fahrzeugsteuereinheit

- 80: Sensorik
- 101: Teleoperationssteuervorrichtung
- 110: Prozessor
- 120: Speichereinheit
- 130: Schnittstelle
- 180: Sensorik
- 200: Fahrzeug
- 400: Verfahren
- 410: Verfahrensschritt
- 420: Verfahrensschritt
- 430: Verfahrensschritt
- 435: Verfahrensschritt
- 440: Verfahrensschritt
- 450: Verfahrensschritt

## Patentansprüche

1. Verfahren zum teleoperierten Ansteuern eines Fahrzeugs, umfassend:
- Bereitstellen (410) von Umgebungssensordaten zum
Erfassen einer aktuellen Fahrzeugumgebung des Fahrzeugs,
- Bereitstellen (420) von Sichtsensordaten zum Erfassen
einer aktuellen Sichtrichtung eines von einer Teleoperationsstation operierenden Teleoperateurs des Fahrzeugs von einer Teleoperationsstation,
- Auswerten (430) der Sichtsensordaten zum Ermitteln eines von dem Teleoperateur aktuell erblickten Fokusbereichs (10) der Fahrzeugumgebung, basierend auf der aktuellen Sichtrichtung des Teleoperateurs,
- Reduzieren (440) der Umgebungssensordaten zum Bereitstellen von reduzierten Umgebungssensordaten, so dass die Fahrzeugumgebung mit einer außerhalb des Fokusbereichs (10) herabgesetzten räumlichen Auflösung rekonstruiert werden kann, und
- Übermitteln (450) der reduzierten Umgebungssensordaten an die Teleoperationsstation.

2. Verfahren nach einem der vorhergehenden Ansprüche, wobei das Reduzieren (440) der Umgebungssensordaten ein dynamisches Anpassen der räumlichen Auflösung in Abhängigkeit einer während der Fahrt wechselnden Netzabdeckungs- und Übertragungskapazitätsbedingungen umfasst.

3. Verfahren nach einem der vorhergehenden Ansprüche, wobei das Verfahren (400) ein dynamisches Anpassen des Fokusbereichs (10) umfasst.

4. nach einem der vorhergehenden Ansprüche, wobei das Verfahren (400) einen Datenkompressionsschritt vor dem Übertragen der Umgebungssensordaten umfasst, so dass das zu übertragende Datenvolumen der Umgebungssensordaten reduzieren werden kann.

5. Verfahren nach einem der vorherigen Ansprüche, wobei das Auswerten Approximieren des Fokusbereichs (10) zu einer geometrischen Grundform, wie insbesondere Kreis, Rechteck und/oder Ellipse, umfassen.

6. Fahrzeugsteuervorrichtung zum teleoperierten Ansteuern eines Fahrzeugs, umfassend:
- einen Prozessor (13),
- eine Speichereinheit (20) zum Speichern von maschinenlesbaren Anweisungen für den Prozessor (13),
- eine Schnittstelle (30), wobei die Schnittstelle (30) dazu ausgebildet ist, Umgebungssensordaten zum Erfassen einer aktuellen Fahrzeugumgebung des Fahrzeugs (200) zu empfangen, Sichtsensordaten zum Erfassen einer aktuellen Sichtrichtung eines Teleoperateurs (5) des Fahrzeugs (200) zu empfangen, und die Umgebungssensordaten an eine Teleoperationsstation (1) zu übermitteln, wobei die Speichereinheit (20) Anweisungen für den Prozessor (13) enthält:
- die Umgebungssensordaten zum Bereitstellen von reduzierten Umgebungsdaten zu reduzieren, so dass die Fahrzeugumgebung mit einer außerhalb des Fokusbereichs (10) herabgesetzten räumlichen Auflösung rekonstruiert werden kann, und
- Ansteuern der Schnittstelle (30) zum Übermitteln der reduzierten Umgebungssensordaten an die Teleoperationsstation (1).

7. Teleoperationssteuervorrichtung zur Datenübertragung beim teleoperierten Ansteuern eines Fahrzeugs, umfassend:
- einen Prozessor (110),
- eine Speichereinheit (120) zum Speichern von maschinenlesbaren Anweisungen für den Prozessor (110),
- eine Schnittstelle (130), wobei die Schnittstelle (130) dazu ausgebildet ist, Sichtsensordaten zum Erfassen einer aktuellen Sichtrichtung eines Teleoperateurs (5) des Fahrzeugs (200) zu empfangen, die Sichtsensordaten an eine Fahrzeugsteuervorrichtung (12) zu übermitteln, reduzierte Umgebungssensordaten von der Fahrzeugsteuervorrichtung (12) zu empfangen, und Steuerbefehle zum Ansteuern einer Anzeigevorrichtung auszugeben,
wobei die Speichereinheit (120) Anweisungen für den Prozessor (110) enthält, die Anzeigevorrichtung zum Darstellen einer anhand der reduzierten Umgebungssensordaten rekonstruierten Fahrzeugumgebung anzusteuern.

8. Teleoperationssteuervorrichtung nach Anspruch 7, wobei die Schnittstelle ausgebildet ist, Sichtsensordaten von wenigstens einer Infrarotkamera zu empfangen.

9. System zur Datenübertragung beim teleoperierten Ansteuern eines Fahrzeugs, umfassend:
- eine Fahrzeugsteuervorrichtung (12) nach Anspruch 6,
- eine Teleoperationssteuervorrichtung (101) nach Anspruch 7 oder 8
- wobei die Schnittstelle (30) der Fahrzeugsteuervorrichtung (12) konfiguriert ist, Umgebungssensordaten von der Fahrzeugsteuervorrichtung (12) an die Teleoperationssteuervorrichtung (101) zu übermitteln, und die Schnittstelle (130) der Teleoperationssteuervorrichtung (101) konfiguriert ist, Steuerbefehle von der Teleoperationssteuervorrichtung (101) an die Fahrzeugsteuervorrichtung (12) zum Ansteuern des Fahrzeugs (200) zu übermitteln.

10. Fahrzeug, wobei in dem Fahrzeug (200) eine Fahrzeugsteuervorrichtung (12) zum teleoperierten Ansteuern des Fahrzeugs gemäß Anspruch 6 implementiert ist.
